# EUROPEAN PATENT APPLICATION

(11) **EP 4 417 395 A1**
(43) Date of publication of application: **21.08.2024**
(21) Application number: 23156690.2
(22) Date of filing: 15.02.2023
(51) Int. Cl.: B29C 48/385, B29C 48/40, B29C 48/53, B29C 48/535, B29C 48/595, B29C 48/525, B29C 48/38, B29B 7/40, B29B 7/42

(54) **A SYSTEM AND A METHOD FOR EXTRUSION OF MATERIAL**

(71) Applicant: Wimao Oy, 54190 Konnunsuo (FI)
(72) Inventor: IMMONEN, Ville, 54190 KONNUNSUO (FI); KÄRKI, Timo, 54190 KONNUNSUO (FI); MALINEN, Jarmo, 54190 KONNUNSUO (FI); MIROLA, Pekka, 54190 KONNUNSUO (FI); VARIS, Jussi, 54190 KONNUNSUO (FI); VARIS, Juha, 54190 Konnunsuo (FI)
(74) Representative: Väänänen, Janne Kalervo

(57) **Abstract**

A system for extrusion of material, for example chopped waste plastic, comprises a treatment device (101) for extruding the material and a feeder device (102) comprising a screw conveyor (103) for supplying the material to the treatment device. A screw element (104) of the screw conveyor has: a) a conical profile so that a diameter of the screw element decreases in a moving direction of the material and/or b) a thread-pitch decreasing in the moving direction of the material and/or c) an axial thickness of a screw thread crest increasing in the moving direction. The conical profile of the screw element and/or the thread-pitch decreasing in the moving direction and/or the axial thickness of the screw thread crest increasing in the moving direction improve the ability of the screw conveyor to compact the material and thereby to supply a sufficiently uniform material flow to the treatment device.

## Description

The project leading to this patent application has received funding from the European Union's Horizon 2020 research and innovation program under grant agreement No 947230.

### Field of the disclosure

The disclosure relates to a system for extrusion of material that can be for example recycled material such as e.g. chopped waste plastic. The system is suitable for converting the material and possible one or more additives into results of nozzle-extrusion. Furthermore, the disclosure relates to a method for extrusion of material.

### Background

Extrusion is a process used to create objects of a fixed cross-sectional profile by pushing material through a die of a desired cross-sectional shape. Two main advantages of extrusion over many other manufacturing processes are its ability to create very complex cross-sections, and to work with materials with limited mechanical strength, because the material encounters only compressive and shear stresses during an extrusion process. It also creates advantageous surface finish and gives considerable freedom to select the shape of the cross-sectional profile of an extrusion product.

In many cases, starting material of an extrusion process can be for example waste plastic with low bulk density, for example fibres, film, stretch film, foamed materials, powder, and/or fine particles. In many cases, the material to be extruded has portions, e.g. different waste plastic materials, with different bulk densities. In these cases, there is a risk that portions of the material having greater bulk densities are separated by gravity from portions of the material having smaller bulk densities, and thus it may be challenging to supply to an extruder device a material flow that is uniform enough.

A typical arrangement to feed material to an extruder device comprises a screw that conveys material from a feeding hopper to above an extruder screw, and then the material falls freely to the extruder screw. In this arrangement, very little compacting of material takes place prior to the extruder screw, and therefore only a low output capacity can be reached with low density materials. There are force feeding systems for e.g. film plastics, but usually those feeding systems are meant only for single stream plastics, and, if multiple different plastic streams with different densities are included, materials with different bulk densities get often disadvantageously separated. Therefore, with low bulk density materials, it can be difficult to supply enough material to an extruder screw of an extruder device to be able to utilise a full capacity or most of the capacity of the extruder device.

### Summary

The following presents a simplified summary to provide a basic understanding of some aspects of various embodiments. The summary is not an extensive overview of the invention. It is neither intended to identify key or critical elements of the invention nor to delineate the scope of the invention. The following summary merely presents some concepts in a simplified form as a prelude to a more detailed description of exemplifying and non-limiting embodiments.

In accordance with the invention, there is provided a new system for extrusion of material that can be for example recycled material such as e.g. chopped waste plastic. A system according to the invention comprises:
- a treatment device configured to extrude the material, and
- a feeder device configured to receive the material and comprising a screw conveyor configured to supply the material to the treatment device.

A screw element of the screw conveyor has:
a) a conical profile so that a diameter of the screw element decreases in a moving direction of the material so that the diameter is greater at a first end of the screw conveyor than at a second end the screw conveyor connected to the treatment device, and/or
b) a thread-pitch decreasing in the moving direction of the material so that the thread-pitch is greater at the first end of the screw conveyor than at the second end of the screw conveyor, and/or
c) an axial thickness of a screw thread crest increasing in the moving direction of the material so that the axial thickness of the screw thread crest is smaller at the first end of the first screw conveyor than at the second end of the first screw conveyor.

The above-mentioned conical profile of the screw element and/or the thread-pitch decreasing in the moving direction of the material improves the ability of the screw conveyor to compact the material and thereby to supply a sufficiently uniform material flow to the treatment device. This is advantageous especially in cases in which the material has portions having lower bulk densities and portions having greater bulk densities. In this document, the verb "compacting" means pressing material and thereby removing air and/or other gas and/or liquid, e.g. water, from the material.

In accordance with the invention, there is provided also a new method for extrusion of material. A method according to the invention comprises:
- supplying the material to a screw conveyor of a feeder device, and
- extruding the material with a treatment device receiving the material from the screw conveyor of the feeder device.

A screw element of the screw conveyor has: a) a conical profile so that a diameter of the screw element decreases in a moving direction of the material so that the diameter is greater at a first end of the screw conveyor than at a second end the screw conveyor connected to the treatment device, and/or b) a thread-pitch decreasing in the moving direction of the material so that the thread-pitch is greater at the first end of the screw conveyor than at the second end of the screw conveyor, and/or c) an axial thickness of a screw thread crest increasing in the moving direction of the material so that the axial thickness of the screw thread crest is smaller at the first end of the first screw conveyor than at the second end of the first screw conveyor.

Exemplifying and non-limiting embodiments are described in accompanied dependent claims.

Various exemplifying and non-limiting embodiments both as to constructions and to methods of operation, together with additional objects and advantages thereof, will be best understood from the following description of specific exemplifying and non-limiting embodiments when read in conjunction with the accompanying drawings.

The verbs "to comprise" and "to include" are used in this document as open limitations that neither exclude nor require the existence of unrecited features.

The features recited in dependent claims are mutually freely combinable unless otherwise explicitly stated.

Furthermore, it is to be understood that the use of "a" or "an", i.e. a singular form, throughout this document does not exclude a plurality.

### Brief description of the figures

Exemplifying and non-limiting embodiments and their advantages are explained in greater detail below in the sense of examples and with reference to the accompanying drawings, in which:
figures 1a and 1b illustrate a system according to an exemplifying and non-limiting embodiment for extrusion of material,
figure 2a illustrates a system according to an exemplifying and non-limiting embodiment for extrusion of material,
figure 2b illustrates a system according to an exemplifying and non-limiting embodiment for extrusion of material,
figure 3a illustrates a system according to an exemplifying and non-limiting embodiment for extrusion of material,
figure 3b illustrates a system according to an exemplifying and non-limiting embodiment for extrusion of material,
figure 4 illustrates a system according to an exemplifying and non-limiting embodiment for extrusion of material, and
figure 5 shows a flowchart of a method according to an exemplifying and non-limiting embodiment for extrusion of material.

### Description of the exemplifying embodiments

The specific examples provided in the description given below should not be construed as limiting the scope and/or the applicability of the appended claims. Lists and groups of examples provided in the description given below are not exhaustive unless otherwise explicitly stated.

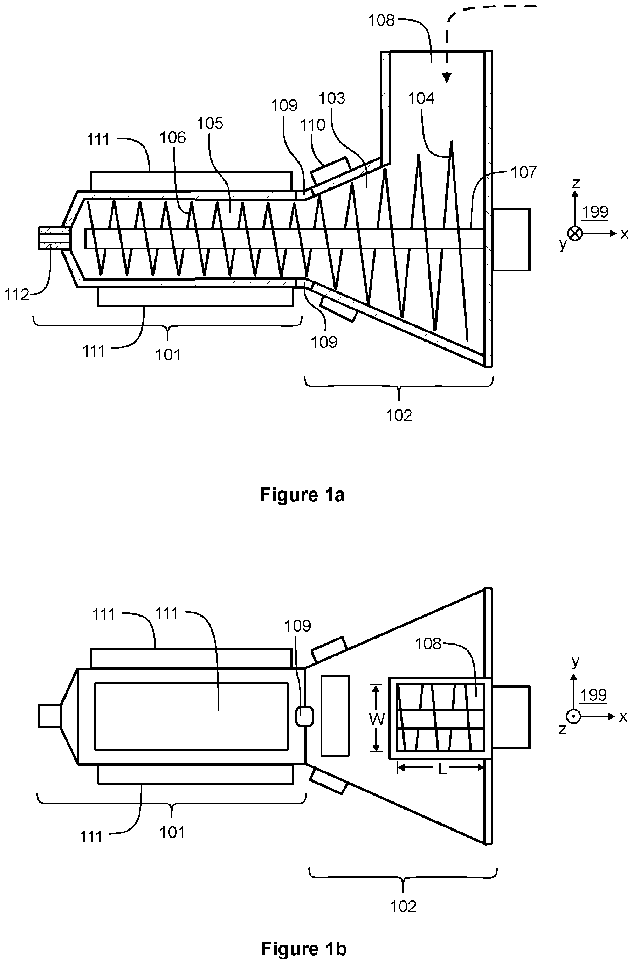

Figures 1a and 1b illustrate a system according to an exemplifying and non-limiting embodiment for extrusion of material. In figure 1a, supply of the material is depicted with a dashed line arrow. In figure 1a, an outer casing of the system is shown as a section view so that a geometric section plane is parallel with the xz-plane a coordinate system 199. Figure 1b shows a top view of the system. The material that is supplied to the system can be for example recycled material such as e.g. chopped waste plastic with portions having lower and greater bulk densities, e.g. film, stretch film, foamed plastic, plastic powder, and/or fine plastic particles. The system comprises a feeder device 102 which is configured to receive the material, and which comprises a first screw conveyor 103 configured to supply the material to a treatment device 101 configured to extrude the material. In this exemplifying case, the treatment device 101 comprises a second screw conveyor 105 configured to receive the material from the feeder device 102 and to push the material through an extruding nozzle 112 having a shape for obtaining a desired cross-sectional shape of an extrusion product. The treatment device 101 comprises heaters 111 for heating the material to be suitable for the extrusion process. Temperature of the extrusion product coming out from the treatment device 101 can be for example about 200°C. The system may further comprise a cooler after the treatment device 101. The cooler is not shown in figures 1a and 1b.

The screw conveyor 103 of the feeder device 102 comprises a first screw element 104 that has a conical profile so that a diameter of the screw element 104 decreases in a moving direction of the material so that the diameter is greater at a first end of the first screw conveyor 103 than at a second end the first screw conveyor 103 connected to the treatment device 101. The conical profile of the screw element 104 improves the ability of the screw conveyor 103 to compact the material and thereby to supply a sufficiently uniform material flow to the treatment device 101. This is advantageous especially in cases in which the material has portions having different densities.

In the exemplifying system illustrated in figures 1a and 1b, the screw conveyors 103 and 105 are successively and co-axial with respect to each other, and the screw element 104 of the screw conveyor 103 and a second screw element 106 of the screw conveyor 105 have a common shaft 107. It is however also possible that the screw elements 104 and 106 are driven with separate shafts.

In the exemplifying system illustrated in figures 1a and 1b, a sidewall of the screw conveyor 103 comprises at least one opening 108 to enable supply of the material to the screw conveyor 103. The opening 108 is elongated in the axial direction of the screw conveyor 103, i.e. in the x-direction of a coordinate system 199, so that the axially directed length L of the opening is at least 1.3 times the width W of the opening. In a system according to an exemplifying and no-limiting embodiment, the axial length L is at least 1.5 times the width W. In a system according to an exemplifying and no-limiting embodiment, the axial length L is at least 2 times the width W.

In the exemplifying system illustrated in figures 1a and 1b, the sidewall of the screw conveyor 103 comprises at least one opening 109 at the second end the screw conveyor 103 to remove air and/or liquid from the material that has been compacted by the screw conveyor 103. Furthermore, in this exemplifying case, the sidewall of the screw conveyor 103 comprises at least one heater 110 at the second end the screw conveyor 103 and configured to preheat the material compacted by the screw conveyor 103.

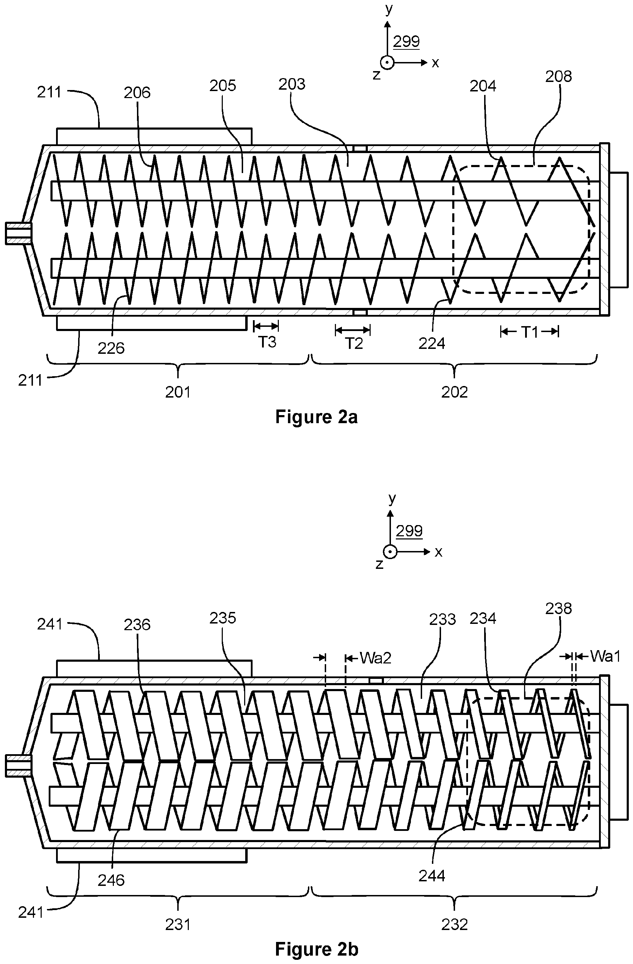

Figure 2a illustrates a system according to an exemplifying and non-limiting embodiment for extrusion of material. In figure 2a, an outer casing of the system is shown as a section view so that a geometric section plane is parallel with the xy-plane a coordinate system 299. The system comprises a feeder device 202 which is configured to receive the material, and which comprises a first screw conveyor 203 configured to supply the material to a treatment device 201 configured to extrude the material. In this exemplifying case, the treatment device 201 comprises a second screw conveyor 205 configured to receive the material from the feeder device 202 and to push the material through an extruding nozzle having a shape for obtaining a desired cross-sectional shape of an extrusion product. The treatment device 201 comprises heaters 211 for heating the material to be suitable for the extrusion process.

The screw conveyor 203 of the feeder device 202 comprises two parallel screw elements 204 and 224. Correspondingly, the screw conveyor 205 of the treatment device 201 comprises two parallel screw elements 206 and 226. The screw conveyors 203 and 205 are successively and co-axial with respect to each other, and the screw elements 204 and 206 have a common shaft and correspondingly the screw elements 224 and 226 have another common shaft. A sidewall of the screw conveyor 203 of the feeder device 202 comprises an opening to enable supply of the material to the screw conveyor 203. In figure 2a, the opening is depicted with a dashed line 208. The thread-pitch of the screw elements 204 and 224 decreases in the moving direction of the material so that the thread-pitch is greater at a first end of the screw conveyor 203 than at a second end of the screw conveyor 203 connected to the treatment device 201. In figure 2a, two exemplifying thread-pitches of the screw elements 204 and 224 are denoted with T1 and T2. The decreasing thread-pitch of the screw elements 204 and 224 improves the ability of the screw conveyor 203 to compact the material and thereby to supply a sufficiently uniform material flow to the treatment device 201.

The thread-pitch T2 of the screw elements 204 and 224 at the second end of the screw conveyor 203 is advantageously greater than the thread-pitch T3 of the screw elements 206 and 226 of the treatment device 201. In this exemplifying case, the thread-pitch T3 of the screw elements 206 and 226 of the treatment device 201 is constant, but it is also possible that the thread-pitch of a screw element, or screw elements, of the treatment device decreases in the moving direction of material.

Figure 2b illustrates a system according to an exemplifying and non-limiting embodiment for extrusion of material. In figure 2b, an outer casing of the system is shown as a section view so that a geometric section plane is parallel with the xy-plane a coordinate system 299. The system comprises a feeder device 232 which is configured to receive the material, and which comprises a first screw conveyor 233 configured to supply the material to a treatment device 231 configured to extrude the material. In this exemplifying case, the treatment device 231 comprises a second screw conveyor 235 configured to receive the material from the feeder device 232 and to push the material through an extruding nozzle having a shape for obtaining a desired cross-sectional shape of an extrusion product. The treatment device 231 comprises heaters 241 for heating the material to be suitable for the extrusion process.

The screw conveyor 233 of the feeder device 232 comprises two parallel screw elements 234 and 244. Correspondingly, the screw conveyor 235 of the treatment device 231 comprises two parallel screw elements 236 and 246. The screw conveyors 233 and 235 are successively and co-axial with respect to each other, and the screw elements 234 and 236 have a common shaft and correspondingly the screw elements 244 and 246 have another common shaft. A sidewall of the screw conveyor 233 of the feeder device 232 comprises an opening to enable supply of material to the screw conveyor 233. In figure 2b, the opening is depicted with a dashed line 238. An axial thickness of the screw threads of the screw elements 234 and 244 increases in the moving direction of the material so that the axial thickness of the screw thread crest is smaller at a first end of the screw conveyor 233 than at a second end of the screw conveyor 233 connected to the treatment device 231. In figure 2b, two exemplifying axial thicknesses of the screw thread crest of the screw elements 234 and 244 are denoted with Wa1 and Wa2. The increasing axial thickness of the screw thread crest improves the ability of the screw conveyor 203 to compact the material and thereby to supply a sufficiently uniform material flow to the treatment device 201.

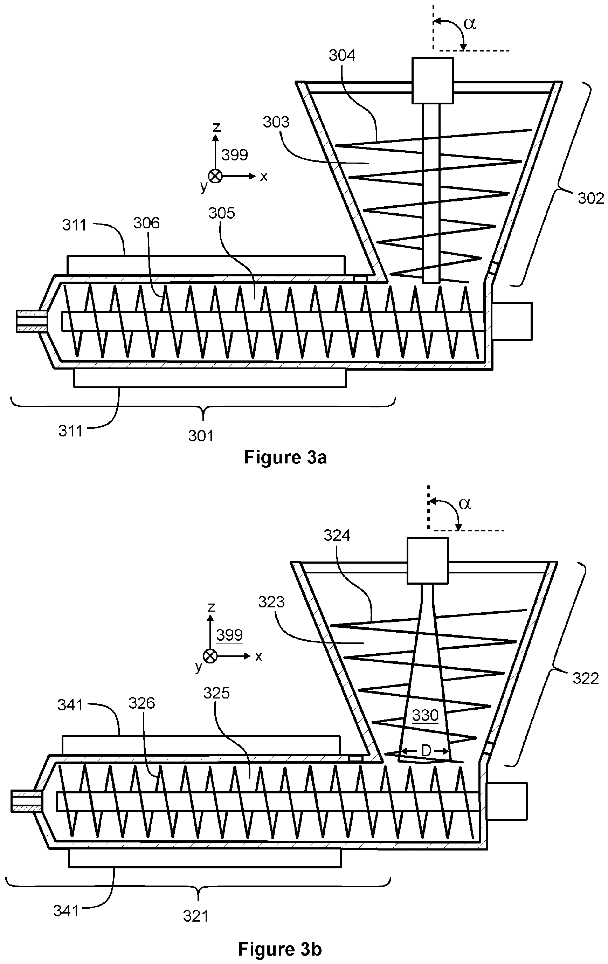

Figure 3a illustrates a system according to an exemplifying and non-limiting embodiment for extrusion of material. In figure 3a, an outer casing of the system is shown as a section view so that a geometric section plane is parallel with the xz-plane a coordinate system 399. The system comprises a feeder device 302 which is configured to receive the material, and which comprises a first screw conveyor 303 configured to supply the material to a treatment device 301 configured to extrude the material. In this exemplifying case, the treatment device 301 comprises a second screw conveyor 305 configured to receive the material from the feeder device 302 and to push the material through an extruding nozzle having a shape for obtaining a desired cross-sectional shape of an extrusion product. The treatment device 301 comprises heaters 311 for heating the material to be suitable for the extrusion process. The screw conveyor 303 comprises a first screw element 304, and the screw conveyor 305 comprises a second screw element 306. The screw element 304 has a conical profile so that a diameter of the screw element 304 decreases in a moving direction of the material so that the diameter is greater at a first end of the screw conveyor 303 than at a second end the screw conveyor 303 connected to the treatment device 301. The conical profile of the screw element 304 improves the ability of the screw conveyor 303 to compact the material and thereby to supply a sufficiently uniform material flow to the treatment device 301.

In the exemplifying system illustrated in figure 3a, the axial directions of the screw conveyors 303 and 305 are perpendicular to each other, i.e. an angle α is 90 degrees.

Figure 3b illustrates a system according to an exemplifying and non-limiting embodiment for extrusion of material. In figure 3b, an outer casing of the system is shown as a section view so that a geometric section plane is parallel with the xz-plane a coordinate system 399. The system comprises a feeder device 322 which is configured to receive the material, and which comprises a first screw conveyor 323 configured to supply the material to a treatment device 321 configured to extrude the material. In this exemplifying case, the treatment device 321 comprises a second screw conveyor 325 configured to receive the material from the feeder device 322 and to push the material through an extruding nozzle having a shape for obtaining a desired cross-sectional shape of an extrusion product. The treatment device 321 comprises heaters 341 for heating the material to be suitable for the extrusion process. The screw conveyor 323 comprises a first screw element 324, and the screw conveyor 325 comprises a second screw element 326. The screw element 324 has a conical profile so that a diameter of the screw element 324 decreases in a moving direction of the material so that the diameter is greater at a first end of the screw conveyor 323 than at a second end the screw conveyor 323 connected to the treatment device 321. Furthermore, a shaft 330 of the screw element 324 is conical so that the diameter D of the shaft increases in the moving direction of the material so that the diameter of the shaft is smaller at the first end of the screw conveyor 323 than at the second end of the first screw conveyor 323. The conical profile of the screw element 304 and the conical shaft 330 improve the ability of the screw conveyor 323 to compact the material and thereby to supply a sufficiently uniform material flow to the treatment device 321.

A conical shaft of the kind mentioned above can also be used in conjunction with a screw element, such as the screw elements 204 and 224 shown in figure 2a, where the thread-pitch decreases in the moving direction of the material as well as in conjunction with a screw element, such as the screw elements 234 and 244 shown in figure 2b, where the axial thickness of the screw thread crest increases in the moving direction of the material.

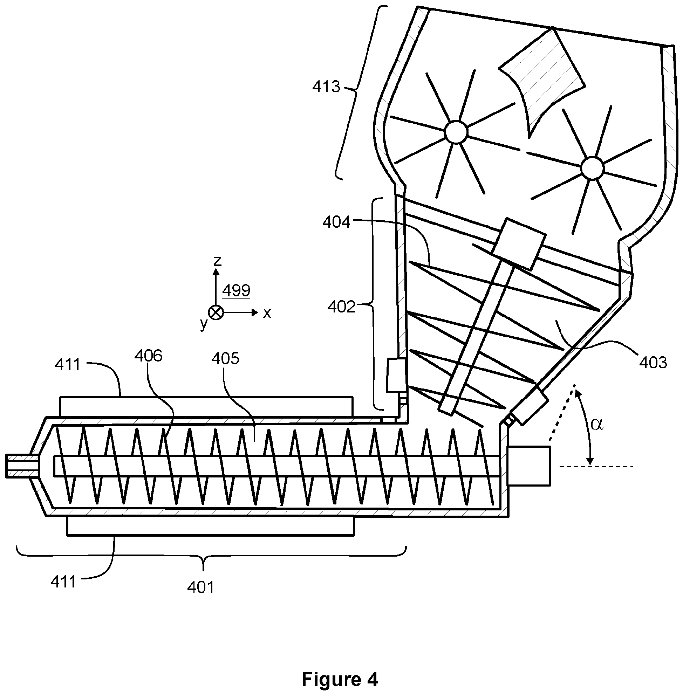

Figure 4 illustrates a system according to an exemplifying and non-limiting embodiment in which the above-mentioned angle α is more than zero and less than 90 degrees. In figure 4, an outer casing of the system is shown as a section view so that a geometric section plane is parallel with the xz-plane a coordinate system 499. The system comprises a feeder device 402 which is configured to receive the material, and which comprises a first screw conveyor 403 configured to supply the material to a treatment device 401 configured to extrude the material. In this exemplifying case, the treatment device 401 comprises a second screw conveyor 405 configured to receive the material from the feeder device 402 and to push the material through an extruding nozzle having a shape for obtaining a desired cross-sectional shape of an extrusion product. The treatment device 401 comprises heaters 411 for heating the material to be suitable for the extrusion process.

The screw conveyor 403 comprises a first screw element 404, and the screw conveyor 405 comprises a second screw element 406. The screw element 404 has a conical profile so that a diameter of the screw element 404 decreases in a moving direction of the material so that the diameter is greater at a first end of the screw conveyor 403 than at a second end the first screw conveyor 403 connected to the treatment device 401. Furthermore, the thread-pitch of the screw element 404 decreases in the moving direction of the material so that the thread-pitch is greater at the first end of the screw conveyor 403 than at the second end of the screw conveyor 403 connected to the treatment device 401. The conical profile and the decreasing thread-pitch of the screw element 404 improve the ability of the screw conveyor 403 to compact the material and thereby to supply a sufficiently uniform material flow to the treatment device 401. Furthermore, the exemplifying system illustrated in figure 4 comprises a compactor device 413 that comprises paddlewheels for pushing material into the feeder device 402.

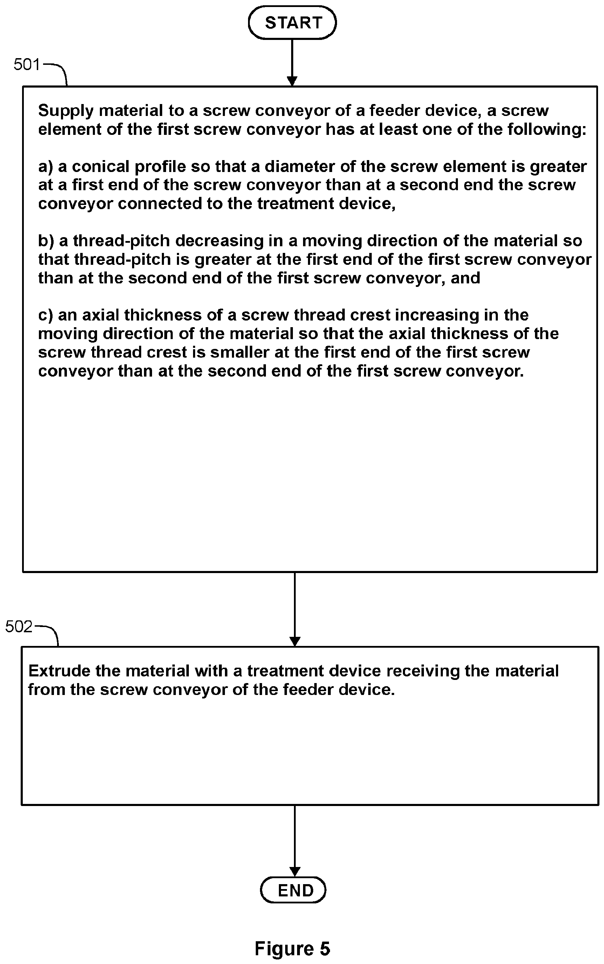

Figure 5 shows a flowchart of a method according to an exemplifying and non-limiting embodiment for extrusion of material, e.g. recycled material such as chopped waste plastic. The method comprises the following actions:
- action 501: supplying the material to a first screw conveyor of a feeder device, and
- action 502: extruding the material with a treatment device receiving the material from the first screw conveyor of the feeder device,
wherein a first screw element of the first screw conveyor has at least one of the following: a) a conical profile so that a diameter of the first screw element decreases in a moving direction of the material so that the diameter is greater at a first end of the first screw conveyor than at a second end the first screw conveyor connected to the treatment device, b) a thread-pitch decreasing in the moving direction of the material so that the thread-pitch is greater at the first end of the first screw conveyor than at the second end of the first screw conveyor, and c) an axial thickness of a screw thread crest increasing in the moving direction of the material so that the axial thickness of the screw thread crest is smaller at the first end of the first screw conveyor than at the second end of the first screw conveyor.

In a method according to an exemplifying and non-limiting embodiment, the material comprises waste plastic.

In a method according to an exemplifying and non-limiting embodiment, the treatment device comprises a second screw conveyor configured to receive the material from the feeder device and to press the material through an extruding nozzle of the treatment device.

In a method according to an exemplifying and non-limiting embodiment, the thread-pitch of the first screw element of the first screw conveyor at the second end of the first screw conveyor is greater than the thread-pitch of a second screw element of the second screw conveyor.

In a method according to an exemplifying and non-limiting embodiment, the first screw conveyor comprises two parallel screw elements one of which is the first screw element.

In a method according to an exemplifying and non-limiting embodiment, the second screw conveyor comprises two parallel screw elements one of which is the second screw element.

In a method according to an exemplifying and non-limiting embodiment, the first and second screw conveyors are successively and co-axial with respect to each other. In a method according to an exemplifying and non-limiting embodiment, first and second screw elements have a common shaft.

In a method according to an exemplifying and non-limiting embodiment, the axial directions of the first and second screw conveyors have an angle greater than zero with respect to each other. In a method according to an exemplifying and non-limiting embodiment, the angle between the axial directions is 90 degrees.

In a method according to an exemplifying and non-limiting embodiment, a sidewall of the first screw conveyor comprises at least one opening to enable supply of the material to the first screw conveyor. In a method according to an exemplifying and non-limiting embodiment, the opening is elongated in an axial direction of the first screw conveyor so that an axially directed length of the opening is at least 1.3 times a width of the opening.

In a method according to an exemplifying and non-limiting embodiment, a sidewall of the first screw conveyor comprises at least one opening at the second end the first screw conveyor connected to the treatment device to remove air from the material compacted by the first screw conveyor.

In a method according to an exemplifying and non-limiting embodiment, a sidewall of the first screw conveyor comprises at least one heater at the second end the first screw conveyor to preheat the material compacted by the first screw conveyor.

In a method according to an exemplifying and non-limiting embodiment, a shaft of the first screw element is conical so that a diameter of the shaft increases in the moving direction of the material so that the diameter of the shaft is smaller at the first end of the first screw conveyor than at the second end of the first screw conveyor.

The specific examples provided in the description given above should not be construed as limiting the applicability and/or the interpretation of the appended claims. Lists and groups of examples provided in the description given above are not exhaustive unless otherwise explicitly stated.

## Claims

1. A system for extrusion of material, the system comprising:
- a treatment device (101, 201, 231, 301, 401) configured to extrude the material, and
- a feeder device (102, 202, 232, 302, 322, 402) configured to receive the material and comprising a first screw conveyor (103, 203, 233, 303, 323, 403) configured to supply the material to the treatment device,
**characterized in that** a first screw element (104, 204, 234, 304, 324, 404) of the first screw conveyor has at least one of the following a), b) and c):
a) a conical profile so that a diameter of the first screw element decreases in a moving direction of the material so that the diameter is greater at a first end of the first screw conveyor than at a second end the first screw conveyor connected to the treatment device,
b) a thread-pitch (T1, T2) decreasing in the moving direction of the material so that the thread-pitch is greater at the first end of the first screw conveyor than at the second end of the first screw conveyor, and
c) an axial thickness (Wa1, Wa2) of a screw thread crest increasing in the moving direction of the material so that the axial thickness of the screw thread crest is smaller at the first end of the first screw conveyor than at the second end of the first screw conveyor.

2. A system according to claim 1, wherein the treatment device comprises a second screw conveyor (105, 205, 305, 405) comprising a second screw element (106, 206, 306, 406) and a configured to receive the material from the feeder device and to press the material through an extruding nozzle of the treatment device.

3. A system according to claim 2, wherein the thread-pitch (T2) of the first screw element (204) of the first screw conveyor at the second end of the first screw conveyor is greater than a thread-pitch (T3) of the second screw element (206) of the second screw conveyor.

4. A system according to claim 2 or 3, wherein the first screw conveyor (203) comprises two parallel screw elements (204, 224) one of which being the first screw element (204).

5. A system according to any one of claims 2-4, wherein the second screw conveyor (205) comprises two parallel screw elements (206, 226) one of which being the second screw element (206).

6. A system according to any one of claims 2-5, wherein the first and second screw conveyors (103, 105, 203, 205) are successively and co-axial with respect to each other.

7. A system according to claim 6, wherein the first screw element (104) and the second screw element (106) have a common shaft (107).

8. A system according to any one of claims 2-5, wherein axial directions of the first and second screw conveyors (303, 305, 403, 405) have an angle (α) greater than zero with respect to each other.

9. A system according to claim 8, wherein the angle between the axial directions of the first and second screw conveyors (303, 305) is 90 degrees.

10. A system according to any one of claims 1-9, wherein a sidewall of the first screw conveyor comprises at least one opening (108) to enable supply of the material to the first screw conveyor.

11. A system according to claim 10, wherein the opening (108) is elongated in an axial direction of the first screw conveyor so that an axially directed length (L) of the opening is at least 1.3 times a width (W) of the opening.

12. A system according to any one of claims 1-11, wherein a sidewall of the first screw conveyor comprises at least one opening (109) at the second end the first screw conveyor to remove air and liquid from the material compacted by the first screw conveyor.

13. A system according to any one of claims 1-12, wherein a sidewall of the first screw conveyor comprises at least one heater (110) at the second end the first screw conveyor to warm up the material compacted by the first screw conveyor.

14. A system according to any one of claims 1-13, wherein a shaft (330) of the first screw element is conical so that a diameter (D) of the shaft increases in the moving direction of the material so that the diameter of the shaft is smaller at the first end of the first screw conveyor than at the second end of the first screw conveyor.

15. A method for extrusion of material, the method comprising:
- supplying (501) the material to a first screw conveyor of a feeder device, and
- extruding (502) the material with a treatment device receiving the material from the first screw conveyor of the feeder device,
**characterized in that** a first screw element of the first screw conveyor has at least one of the following a), b) and c):
a) a conical profile so that a diameter of the first screw element decreases in a moving direction of the material so that the diameter is greater at a first end of the first screw conveyor than at a second end the first screw conveyor connected to the treatment device,
b) a thread-pitch decreasing in the moving direction of the material so that the thread-pitch is greater at the first end of the first screw conveyor than at the second end of the first screw conveyor, and
c) an axial thickness of a screw thread crest increasing in the moving direction of the material so that the axial thickness of the screw thread crest is smaller at the first end of the first screw conveyor than at the second end of the first screw conveyor.

## Amended claims

### Amended claims in accordance with Rule 137(2) EPC.

1. A system for extrusion of material, the system comprising:
- a treatment device (101, 201, 231, 301, 401) configured to extrude the material, and
- a feeder device (102, 202, 232, 302, 322, 402) configured to receive the material and comprising a first screw conveyor (103, 203, 233, 303, 323, 403) configured to supply the material to the treatment device,
**characterized in that** a first screw element (104, 204, 234, 304, 324, 404) of the first screw conveyor has an axial thickness (Wa1, Wa2) of a screw thread crest increasing in the moving direction of the material so that the axial thickness of the screw thread crest is smaller at the first end of the first screw conveyor than at the second end of the first screw conveyor.

2. A system according to claim 1, wherein the treatment device comprises a second screw conveyor (105, 205, 305, 405) comprising a second screw element (106, 206, 306, 406) and a configured to receive the material from the feeder device and to press the material through an extruding nozzle of the treatment device.

3. A system according to claim 2, wherein a thread-pitch (T2) of the first screw element (204) of the first screw conveyor at the second end of the first screw conveyor is greater than a thread-pitch (T3) of the second screw element (206) of the second screw conveyor.

4. A system according to claim 2 or 3, wherein the first screw conveyor (203) comprises two parallel screw elements (204, 224) one of which being the first screw element (204).

5. A system according to any one of claims 2-4, wherein the second screw conveyor (205) comprises two parallel screw elements (206, 226) one of which being the second screw element (206).

6. A system according to any one of claims 2-5, wherein the first and second screw conveyors (103, 105, 203, 205) are successively and co-axial with respect to each other.

7. A system according to claim 6, wherein the first screw element (104) and the second screw element (106) have a common shaft (107).

8. A system according to any one of claims 2-5, wherein axial directions of the first and second screw conveyors (303, 305, 403, 405) have an angle (α) greater than zero with respect to each other.

9. A system according to claim 8, wherein the angle between the axial directions of the first and second screw conveyors (303, 305) is 90 degrees.

10. A system according to any one of claims 1-9, wherein a sidewall of the first screw conveyor comprises at least one opening (108) to enable supply of the material to the first screw conveyor.

11. A system according to claim 10, wherein the opening (108) is elongated in an axial direction of the first screw conveyor so that an axially directed length (L) of the opening is at least 1.3 times a width (W) of the opening.

12. A system according to any one of claims 1-11, wherein a sidewall of the first screw conveyor comprises at least one opening (109) at the second end the first screw conveyor to remove air and liquid from the material compacted by the first screw conveyor.

13. A system according to any one of claims 1-12, wherein a sidewall of the first screw conveyor comprises at least one heater (110) at the second end the first screw conveyor to warm up the material compacted by the first screw conveyor.

14. A system according to any one of claims 1-13, wherein a shaft (330) of the first screw element is conical so that a diameter (D) of the shaft increases in the moving direction of the material so that the diameter of the shaft is smaller at the first end of the first screw conveyor than at the second end of the first screw conveyor.

15. A method for extrusion of material, the method comprising:
- supplying (501) the material to a first screw conveyor of a feeder device, and
- extruding (502) the material with a treatment device receiving the material from the first screw conveyor of the feeder device,
**characterized in that** a first screw element of the first screw conveyor has an axial thickness of a screw thread crest increasing in the moving direction of the material so that the axial thickness of the screw thread crest is smaller at the first end of the first screw conveyor than at the second end of the first screw conveyor.
